# EUROPÄISCHE PATENTSCHRIFT

(11) **EP 1 621 777 B1**
(45) Veröffentlichungstag und Bekanntmachung des Hinweises auf die Patenterteilung: **09.03.2016**
(21) Anmeldenummer: 05012182.1
(22) Anmeldetag: 07.06.2005
(51) Int. Cl.: F15B 13/02, F15B 15/14, F15B 11/024, F16H 61/30

(54) **Hydraulischer Linearantrieb, insbesondere hydraulischer Getriebeaktuator**
Hydraulic linear drive, especially hydraulic transmission actuator
Entraînement linéaire hydraulique, en particulier actionneur hydraulique de transmission

(30) Priorität: 30.07.2004 DE 102004037104
(43) Veröffentlichungstag der Anmeldung: 01.02.2006
(73) Patentinhaber: Dr. Ing. h.c. F. Porsche AG, 70435 Stuttgart (DE)
(72) Erfinder: Nassif, Serge, 67450 Mundolsheim (FR)

(56) Entgegenhaltungen:
- EP-A- 1 103 727
- DE-A1- 19 834 955
- DE-A1- 19 921 301
- DE-A1-102004 044 729
- DE-C1- 4 420 367
- JP-A- 8 193 601

## Beschreibung

Die Erfindung betrifft einen hydraulischen Linearantrieb, insbesondere einen hydraulischen Getriebeaktuator nach den Merkmalen des Oberbegriffs des Patentanspruchs 1,

Hydraulische Linearantriebe werden beispielsweise bei automatisierten Schaltgetrieben für die Synchronisierung der Getriebegänge eingesetzt (siehe beispielsweise Johannes Loomann, Zahnradgetriebe, 2. Auflage, Seite 156 ff.).

Aus der JP 08193601 A Ist eine pneumatische Schaltanordnung bekannt, mir der eine Beeinflussung der Versteilgeschwindigkeit eines Stellkolbens nicht möglich Ist. In der DE 199 21 301 A1 ist ein Schaltventil beschrieben, bei dem zwei Druckräume des Stellglieds durch eine einzige Steuerleitung verbunden sind, an der eine Abzweigung vorgesehen ist. In der EP 1 103 727 A2 ist eine hydraulische Betätigungsanordnung beschrieben, bei der zwei Arbeitsräume des Arbeitszylinders über ein schaltbares Ventil direkt verbindbar sind. Darüber hinaus Ist aus der DE 44 20 367 C1 eine Querfederung für ein Schienenfahrzeug und ein Verfahren zur deren Steuerung bekannt.

Bei den gattungsgemäßen hydraulischen Linearantrieben wird der von zwei Druckräumen begrenzte Doppelkolben durch eine entsprechende Druckbeaufschlagung jeweils nach links oder rechts verschoben, wobei wie beispielsweise in der DE 198 34 955 A1 dargestellt und beschrieben, durch zusätzliche In den beiden Steuerleitungen Integrierte Steuerventile die Verstellgeschwindigkeit des Hydraulikkolbens einstellbar ist.

Aufgabe der Erfindung ist es, eine Schaltungsanordnung vorzusehen, bei der mit wenigen hydraulischen Bauelementen die Verstellkraft bzw. Verstellgeschwindigkeit des doppelt wirkenden Hydraulikzylinders auf einfache Art und Welse variierbar ist. Die Aufgabe wird durch die im Anspruch 1 angegebenen Merkmale gelöst.

Dadurch dass zwischen den beiden zu den Druckräumen führenden Steuerleitungen eine Verbindungsleitung angeordnet Ist, In der ein Steuerventil wahlweise die Verbindungsleitung freigibt oder sperrt, Ist der Valumenstrom zu dem mit Druck beaufschlagten Druckraum steuerbar, so dass damit die Verstellgeschwindigkeit bzw. die Verstellkraft des Hydraulikkolbens beeinflusst werden kann. So ist beispielsweise bei der Verwendung des Linearantriebs als hydraulischer Getriebeaktuator eine Absenkung der Synchronkraft möglich; ist ein komfortables Schalten gewünscht, so kann mit geringer Stellkraft der Gang eingelegt werden, während bei einem gewünschten sportlichen Schaltvorgang der Getriebeaktuator mit einer hohen Synchronkraft betätigbar ist.

Durch die in den Unteransprüchen angegebenen Merkmale sind weitere vorteilhafte Ausgestaltungen und Weiterbildungen des hydraulischen Linearantriebs möglich.

Das in der Verbindungsleitung integrierte Steuerventil weist in einer ersten vorteilhaften Ausführungsform drei Schaltstellungen auf, bei der in einer ersten Schaltstellung die Verbindungsleitung geschlossen, in einer zweiten Schaltstellung die Verbindungsleitung mit einem kleinen Öffnungsquerschnitt und in einer dritten Schaltstellung mit einem grösseren Öffnungsquerschnitt geöffnet ist. Neben den drei zuvor beschriebenen diskreten Schaltstellungen ist es auch denkbar, dass das Steuerventil ein verstellbares Ventilglied aufweist, das zwischen einer vollständig geöffneten Schaltstellung und einer vollständig geschlossenen Schaltstellung kontinuierlich verstellbar ist.

In einer zweiten vorteilhaften Ausführungsform weist das Steuerventil eine erste geschlossene Schaltstellung und eine zweite geöffnete Schaltstellung auf, wobei das Steuerventil zwischen diesen beiden Schaltstellungen getaktet betreibbar ist. Auch dadurch ist es möglich, den Volumenstrom zu der mit Hydrauliköl beaufschlagten Druckkammer und damit die Stellkraft, die auf den Hydraulikkolben wirkt, zu variieren.

Zwei Ausführungsbeispiele der Erfindung sind in der Zeichnung dargestellt und werden im nachfolgenden näher beschrieben.

Es zeigen:
- Fig. 1: ein Schaltschema für einen hydraulischen Linearantrieb gemäß einer ersten Ausführungsform und
- Fig. 2: ein Schaltschema für einen hydraulischen Linearantrieb gemäß einer zweiten Ausführungsform.

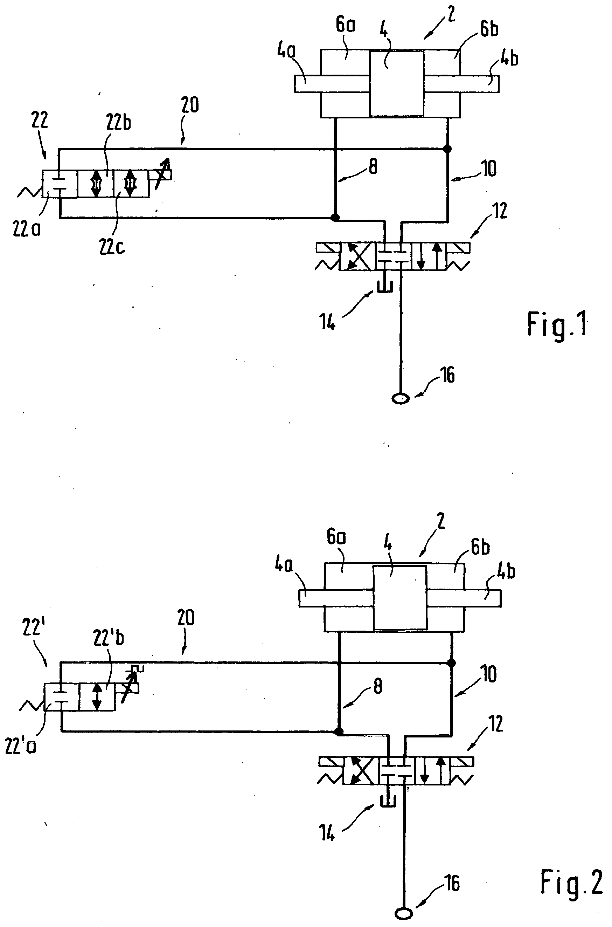

Der in Fig. 1 dargestellte hydraulische Linearantrieb, der beispielsweise als hydraulischer Getriebeaktuator für ein automatisiertes Schaltgetriebe einsetzbar ist, weist ein Zylindergehäuse 2 auf, in dem ein doppelt wirkender Stellkolben 4 mit zwei nach links und rechts aus dem Zylindergehäuse 2 herausgeführten Kolbenstangen 4a und 4b längsverschieblich aufgenommen ist. Der Stellkolben 4 unterteilt den Zylinderraum in zwei Druckräume 6a und 6b an die jeweils eine hydraulische Steuerleitung 8 und 10 angeschlossen sind. Die beiden Steuerleitungen 8 und 10 sind an zwei Ausgängen eines 4/3-Schaltventils 12 angeschlossen, das eingangsseitig über zwei weitere Anschlüsse verfügt, die mit einem Öltank 14 und einer Druckquelle 16, z.B. in Form einer Ölpumpe verbunden sind.

Zwischen den beiden zu den Druckräumen 6a und 6b führenden Steuerleitungen 8 und 10 ist eine Verbindungsleitung 20 angeordnet, in der ein Steuerventil 22 wahlweise die Verbindungsleitung 20 freigibt oder sperrt. Das Steuerventil 22 weist drei Schaltstellungen auf, wobei in einer ersten Schaltstellung 22a die Verbindungsleitung 20 geschlossen ist, während in einer zweiten Schaltstellung 22b mit einem kleinen Öffnungsquerschnitt und in einer dritten Schaltstellung 22c mit einem grösseren Öffnungsquerschnitt die Verbindungsleitung 20 zum Druckraum 6a bzw. 6b gedrosselt ist. Neben den drei diskret dargestellten Schaltstellungen ist es auch denkbar, dass das Steuerventil 22 ein Ventilglied aufweist, das eine Öffnung zwischen "vollständig geöffnet" und "vollständig geschlossen" kontinuierlich überwacht.

Die Verstellung des Stellkolbens 4 bzw. die Wahl der Verstellkraft für den Stellkolben 4 erfolgt auf folgende Art und Weise: Wird beispielsweise über das 4/3-Schaltventil 12 in seiner linken Schaltstellung über die Steuerleitung 8 der Druckraum 6a mit Hydrauliköl beaufschlagt, so kann der Druck im Druckraum 6a über das Steuerventil 22 entsprechend variiert werden, indem ein Teil des Ölvolumenstroms über die Verbindungsleitung 20 und über die Steuerleitung 10 wieder dem Öltank 14 zugeführt wird. Die über die Verbindungsleitung 10 zurückfließende Ölmenge ist dabei über das Steuerventil 22 wahlweise einstellbar.

Das in Fig. 2 dargestellte Ausführungsbeispiel unterscheidet sich lediglich in der Form des Steuerventils 22', welches lediglich zwei Schaltstellungen - eine erste geschlossene Schaltstellung 22'a - und - eine zweite geöffnete Schaltstellung 22'b - aufweist. Durch einen getakteten Betrieb dieses Steuerventils 22' ist die zuvor beschriebene Funktion zur Steuerung der Verstellgeschwindigkeit bzw. der Verstellkraft des Stellkolbens 4 ebenfalls umsetzbar.

## Patentansprüche

1. Hydraulischer Linearantrieb, insbesondere hydraulischer Getriebeaktuator, mit einer Kolben/Zylindereinhelt, bei der ein Im Zylindergehäuse (2) längsverschieblich angeordneter Stellkolben (4) den Zylinderraum In mindestens zwei Druckräume (6a, 6b) unterteilt, die über Steuerleitungen (8, 10) mit Hydrauliköl beaufschlagbar sind, wobei die wahlweise Druckbeaufschlagung der beiden Druckräume (6a, 6b) durch ein Schaltventil (12) steuerbar ist, wobei zwischen den beiden zu den Druckräumen (6a, 6b) führenden Steuerleitungen (8, 10) eine Verbindungsleitung (20) angeordnet ist, in der ein Steuerventil (22, 22') wahlweise die Verbindungsleitung (20) derart freigibt oder sperrt, dass ein Teil eines Ölvolumenstroms über die Verbindungsleitung (20) und über einer der Steuerleitungen (8, 10) wieder einem Öltank (14) zugeführt wird, so dass der Volumenstrom zu dem mit Druck beaufschlagten Druckraum (6a, 6b) steuerbar Ist, um die Verstellgeschwindigkeit des Stellkolbens (4) zu beeinflussen,
**dadurch gekennzeichnet, dass**
das Steuerventil (22) drei Schaltstellungen aufweist, eine erste Schaltstellung (22a), in der die Verbindungsleitung (20) geschlossen, eine zweite Schaltstellung (22b) mit einem kleinen Öffnungsquerschnitt und eine dritte Schaltstellung (22c) mit einem grösseren Öffnungsquerschnitt, In denen der Durchfluss durch die Verbindungsleitung (20) gedrosselt möglich ist.

2. Hydraulischer Linearantrieb nach Anspruch 1, **dadurch gekennzeichnet, dass** das Steuerventil (22') zwei Schaltstellungen aufweist, eine erste geschlossene Schaltstellung (22'a) und eine zweite geöffnete Schaltstellung (22'b) und dass das Steuerventil (22') getaktet betreibbar ist.

## Claims

1. Hydraulic linear drive, in particular hydraulic geared actuator, having a piston/cylinder unit in which a control piston (4) which is arranged in longitudinally displaceable fashion in the cylinder housing (2) divides the cylinder chamber into at least two pressure chambers (6a, 6b) which can be charged with hydraulic oil via control lines (8, 10), wherein the selective pressurization of the two pressure chambers (6a, 6b) can be controlled by way of a switching valve (12), wherein, between the two control lines (8, 10) which lead to the pressure chambers (6a, 6b), there is arranged a connecting line (20) in which a control valve (22, 22') selectively opens up or blocks the connecting line (20) in such a way that a part of an oil volume flow is fed via the connecting line (20) and via one of the control lines (8, 10) to an oil tank (14) again, such that the volume flow to the pressurized pressure chamber (6a, 6b) can be controlled in order to influence the adjustment speed of the control piston (4),
**characterized in that**
the control valve (22) has three switching positions, a first switching position (22a) in which the connecting line (20) is closed, a second switching position (22b) with a small opening cross section, and a third switching position (22c) with a larger opening cross section, in which the throughflow through the connecting line (20) is possible in throttled fashion.

2. Hydraulic linear drive according to Claim 1, **characterized in that** the control valve (22') has two switching positions, a first, closed switching position (22'a) and a second, open switching position (22'b), and **in that** the control valve (22') can be operated in clocked fashion.

## Revendications

1. Entraînement linéaire hydraulique, en particulier actionneur de transmission hydraulique, comprenant une unité cylindre-piston, dans laquelle un piston de commande (4) disposé de manière déplaçable longitudinalement dans le boîtier de cylindre (2) divise l'espace de cylindre en au moins deux espaces de pression (6a, 6b) qui peuvent être sollicités par le biais de conduites de commande (8, 10) avec de l'huile hydraulique, la sollicitation en pression sélective des deux espaces de pression (6a, 6b) pouvant être commandée par une soupape de commutation (12), une conduite de liaison (20) étant disposée entre les deux conduites de commande (8, 10) conduisant aux espaces de pression (6a, 6b), dans laquelle conduite de liaison une soupape de commande (22, 22') libère ou bloque de manière sélective la conduite de liaison (20) de telle sorte qu'une partie d'un débit volumique d'huile soit acheminée par le biais de la conduite de liaison (20) et par le biais de l'une des conduites de commande (8, 10) à nouveau à un réservoir d'huile (14) de telle sorte que le débit volumique vers l'espace de pression (6a, 6b) sollicité en pression puisse être commandé pour influencer la vitesse de réglage du piston de commande (4),
**caractérisé en ce que**
la soupape de commande (22) présente trois positions de commutation, une première position de commutation (22a), dans laquelle la conduite de liaison (20) est fermée, une deuxième position de commutation (22b) comprenant une petite section transversale d'ouverture et une troisième position de commutation (22c) ayant une plus grande section transversale d'ouverture, dans lesquelles le passage à travers la conduite de liaison (20) est possible de manière étranglée.

2. Entraînement linéaire hydraulique selon la revendication 1, **caractérisé en ce que** la soupape de commande (22') présente deux positions de commutation, une première position de commutation fermée (22'a) et une deuxième position de commutation ouverte (22'b) et **en ce que** la soupape de commande (22') peut fonctionner de manière cyclique.
